Europäisches Patentamt

European Patent Office

Office européen des brevets

(11) Veröffentlichungsnummer : **0 332 014 B1**

(12) **EUROPÄISCHE PATENTSCHRIFT**

(45) Veröffentlichungstag der Patentschrift :
**15.01.92 Patentblatt 92/03**

(21) Anmeldenummer : **89103447.2**

(22) Anmeldetag : **28.02.89**

(51) Int. Cl.⁵ : **C09D 133/02**, C08F 2/02, C08F 212/08, // (C08F212/08, 220:06)

(54) Herstellung von Polymerbindemitteln für Dispersionsfarbern.

(30) Priorität : **05.03.88 DE 3807285**

(43) Veröffentlichungstag der Anmeldung :
**13.09.89 Patentblatt 89/37**

(45) Bekanntmachung des Hinweises auf die
Patenterteilung :
**15.01.92 Patentblatt 92/03**

(84) Benannte Vertragsstaaten :
**AT BE CH DE ES FR GB IT LI NL SE**

(56) Entgegenhaltungen :
**EP-A- 0 047 889
EP-A- 0 100 443**

(73) Patentinhaber : **BASF Aktiengesellschaft
Carl-Bosch-Strasse 38
W-6700 Ludwigshafen (DE)**

(72) Erfinder : **Schweigger, Enrique, Dr.
Woehlerstrasse 16
W-6700 Ludwigshafen (DE)**
Erfinder : **Melan, Michael, Dr.
Hans-Willmann-Strasse 4
W-6706 Wachenheim (DE)**
Erfinder : **Wistuba, Eckehardt, Dr.
Im Obergarten 7
W-6702 Bad Dürkheim (DE)**

## Beschreibung

Copolymerisate aus Acryl- und/oder Methacrylsäure und Styrol, die Molekulargewichte von 700 bis 5000 haben und in wäßrigem Alkali löslich sind, sind beispielsweise aus der britischen Patentschrift 1107249 bekannt. In ihnen beträgt das Verhältnis von carboxylgruppenfreiem Monomer zu carboxylgruppen-enthaltendem Monomer 3 : 1 bis 1 : 1. Ihre alkalischen Lösungen können z.B. als Emulgiermittel, Verlaufsmittel und als Filmbildner eingesetzt werden. Ihre Molekulargewichte liegen vorzugsweise zwischen 1200 und 3600 und man stellt sie durch Lösungspolymerisation unter Zusatz von Polymerisationsinitiatoren her, wobei die Lösungsmittel als Regler dienen. Wenn die Copolymerisate, die Molekulargewichte von 1000 bis 3500 haben, bei Anstrichmitteln als Verlaufsmittel zugesetzt werden, erhält man Beschichtungen, die verbesserten Glanz, guten Verlauf und Wasserfestigkeit aufweisen.

Aus der belgischen Patentschrift 638 259 ist es bekannt, zum Beschichten von Papier und Karton wäßrige Dispersionen von Copolymerisaten des Vinylchlorids und/oder Vinylidenchlorids mit 5 bis 30% ihres Gewichtes an Acryl und/oder Methacrylsäure einzusetzen. Diese Copolymerisate sind jedoch nicht wasserlöslich. Beim Beschichten von Papier mit derartigen Dispersionen treten leicht Verfärbungen auf und beim Einsatz von Filmbildehilfsmitteln < 5% ist der Glanz schlecht. Weiterhin können diese Dispersionen aufgrund von Unverträglichkeiten mit anderen Bindemitteln nicht kombiniert werden.

Schließlich ist es aus den DE-OSen 2040692, 2502172 und 2548393 bekannt, Copolymerisate der Acryl- und/oder Methacrylsäure mit Styrol und ggf. anderen Monomeren für die Oberflächenleimung von Papier einzusetzen. Dabei sollen jedoch die Copolymerisate der DE-OS 2040692 K-Werte von 30 bis 55 aufweisen, was Molekulargewichten von ca. 5000 bis ca. 40.000 entspricht. Derartige Copolymerisate können in Suspension oder durch Fällungspolymerisation in Kohlenwasserstoffen hergestellt und unter Zusatz- von Alkalien in Wasser gelöst werden. Ihre wäßrig alkalischen Lösungen sind jedoch verhältnismäßig viskos und können praktisch nicht für Dispersionsfarben eingesetzt werden. Bei den aus der DE-OS 2548393 bekannten Copolymerisaten, die ggf. Styrol und eine $\alpha,\beta$-monoolefinisch ungesättigte Monocarbonsäure, wie Acrylsäure und/oder Methacrylsäure einpolymerisiert enthalten können, handelt es sich um Lösungspolymerisate, die bei 20 bis 120°C, z.B. in Alkoholen hergestellt sind. Durch Vermischen mit wäßrigen Ammoniak können die entsprechenden wäßrigen alkoholischen Lösungen der Ammoniumsalze hergestellt werden. Die Copolymerisate können auch kontinuierlich durch Massepolymerisation bei Temperaturen zwischen 130 und 320°C unter Druck hergestellt sein und weisen K-Werte von 10 bis 80, insbesondere von 20 bis 45 auf, was Molekulargewichten von ca. 4000 bis ca. 30.000 entspricht. Die Copolymerisate dienen im allgemeinen als Pfropfgrundlage für die Herstellung von Papierleimungsmitteln.

Gegenstand der De-OS 2502172 sind anionische Papierleimungsmittel mit Molekulargewichten von 600 bis 5000 aus ggf. Styrol und Acrylsäure und/oder Methacrylsäure sowie zusätzlich Maleinsäureanhydrid, Maleinsäure, Fumarsäure, Itakonsäure, Vinylphosphonsäure oder Vinylmilchsäure, die durch kontinuierliche Copolymerisation der Monomeren bei Temperaturen von 130 bis 320°C und Drücken über 1 bar hergestellt sind. Sie enthalten bis 35 Gew.-% Acrylsäure und/oder Methacrylsäure einpolymerisiert und werden in Abwesenheit von Reglern durch kontinuierliche Massepolymerisation hergestellt, wobei man vorzugsweise thermisch bei Temperaturen von 170 bis 250°C polymerisiert, doch können bei der Herstellung auch übliche radikalbildende Polymerisationskatalysatoren eingesetzt werden. Die dabei erhaltene Polymerisatschmelze kann mit wäßriger Ammoniaklösung oder mit gasförmigem Ammoniak oder einer anderen wäßrigen Lösung einer Base umgesetzt werden, z.B. mit Natronlauge, Kalilauge oder Aminen, wie Trimethylamin, Diethylamin oder Methylamin. Die neutralisierten Produkte ergeben Lösungen, die das Copolymerisat in einer Menge von 20 bis 40 Gew.-% enthalten. Die Copolymerisate haben Molekulkargewichte im Bereich von 600 bis 5000, vorzugsweise von 1000 bis 3000. Sie können im allgemeinen schlecht mit wäßrigen Polymer-Dispersionen verschnitten werden.

Aus der EP-A 0047889 sind zudem alkalilösliche Harze eines mittleren Molekulargewichts von 500 bis 5000 und mit Säurezahlen von 300 bis 500 bekannt, die durch Copolymerisation von 60 bis 40 Gew.-% aromatisch substituierten Monoolefinen, wie Styrol, und 40 bis 60 Gew.-% eines carboxylgruppenhaltigen Monomeren wie Acryl- und/oder Methacrylsäure, bei Temperaturen von 200 bis 400°C in Abwesenheit von radikalbildenden Initiatoren und Reglern hergestellt sind. Diese Harze werden zusammen mit Polymerdispersionen in Mengen von 0,2 bis 10 Gew.-% zur Herstellung von Selbstglanzemulsionen für das Beschichten von insbesondere Fußböden eingesetzt.

Es wurde nun gefunden, daß Copolymerisate aus Acrylsäure und Styrol mit mittleren Molekulargewichten von 400 bis 5000 sich besonders gut als Additive für wäßrige Dispersionsfarben eignen, wenn sie aus

a)  37 bis 45 Gew.-% Acrylsäure
b)  55 bis 63 Gew.-% Styrol und

2

c)  0 bis 6 Gew.-% anderen hydrophoben monoolefinisch ungesättigten Monomeren

bei 200 bis 400°C durch kontinuierliche Massepolymerisation in Abwesenheit von Polymerisationsinitiatoren und Reglern hergestellt sind.

Als weitere hydrophobe monoolefinisch ungesättigte Monomere kommen z.B. Methylacrylat, Methylmethacrylat, Isobornylacrylat, Dimethylmaleinat und Fumarsäurediethylester in Frage, doch ist mit der Mitverwendung derartiger Monomerer im allgemeinen kein Vorteil verbunden. Die Herstellung der Copolymerisate durch kontinuierliche Massepolymerisation kann z.B. nach den Angaben der EP-PS 100443 erfolgen.

Die Copolymerisate weisen vorzugsweise Molekulargewichte von 500 bis 2000 auf. Die hier angegebenen Molekulargewichte werden auf osmometrischem Weg mit Hilfe des Mechrolab Osmometers (5%-ige Lösung des Polymeren in Aceton) bestimmt.

Die gegebenenfalls ganz oder teilweise neutralisierten wasserverdünnbaren Copolymerisate werden meist in Form ihrer 10 bis 50, vorzugsweise 20 bis 35 gew.-% igen wäßrigen Lösungen als Additiv für wäßrige Dispersionsfarben eingesetzt. Vorzugsweise werden sie dabei im Gemisch mit den Bindemitteln für die Dispersionsfarben auf Basis von hierfür üblichen wäßrigen Polymerisat-Dispersionen eingesetzt, wobei das Abmischverhältnis (fest auf fest) von Wasser verdünnbarem Copolymerisat zu Polymerdispersionen, im allgemeinen 60 : 40 bis 3 : 97, vorzugsweise 40 : 60 bis 5 : 95, beträgt.

Von besonderem Interesse sind die erfindungsgemäßen Zusätze beim Einsatz von feinteiligen Polymer-Dispersionen (d.h. von Dispersionen einer mittleren Teilchengröße von 0,05 bis 0,6 μm), wobei vorzugsweise ein Abmischverhältnis (fest/fest) von wasserverdünnbarem Copolymerisat zu Polymer-Dispersion von 5 : 95 bis 12 : 88 gewählt wird. Verwendet man als Bindemittel für die Dispersionsfarben grobteilige Polymer-Dispersionen (d.h. Dispersionen einer mittleren Teilchengröße über 0,6 bis etwa 1,5 μm) so liegt das genannte Abmischungsverhältnis vorzugsweise im Bereich von 40 : 60 bis 25 : 75.

Beim Vermischen mit den Polymerisat-Dispersionen ist die Reihenfolge der Zugabe ohne Bedeutung. Als Bindemittel-Polymerisat-Dispersionen kommen insbesondere solche in Betracht, die eine Mindestfilmbildetemperatur von 0 bis 30°C aufweisen. Die Copolymerisate können sich vorteilhaft von monoolefinisch ungesättigten Carbonsäureestern, z.B. von Acryl- oder Methacrylsäureestern sowie Vinylestern und zusätzlich von vinylaromatischen Verbindungen, wie besonders Styrol sowie vom Vinyl- oder Vinylidenhalogeniden, wie besonders Vinylchlorid und/oder Vinylidenchlorid sowie zusätzlich von Acrylnitril ableiten. Als monoolefinisch ungesättigte Carbonsäureester kommen z.B. Methylmethacrylat, Acrylsäure-tert.-butylester, Methacrylsäure-n-butylester, Acrylsäure-n-butylester, Methacrylsäurecyclohexylester und Isobornylacrylat in Betracht. Von besonderen Interesse sind wäßrige Dispersionen von Styrol-Acrylsäureestercopolymerisaten mit einer Mindestfilmbildetemperatur von 0 bis 30°C, die neben 30 bis 70 Gew.-% Styrol als Acrylester, Acrylsäureethylester, Methacrylsäure-n-butylester und/oder Acrylsäure-2-ethylhexylester sowie zusätzlich ggf. bis zu 2 Gew.-%, bezogen auf das Copolymerisat, α,β-monoolefinisch ungesättigte 3 bis 5 C-Atome enthaltende Carbonsäuren, wie Acrylsäure oder Methacrylsäure und/oder deren Amide, wie besonders Acrylsäureamid, einpolymerisiert enthalten. Derartige wäßrige Polymerisat-Dispersionen sind im Handel erhältlich und werden als Bindemittel für wäßrige Dispersionsfarben eingesetzt.

Die wäßrigen Dispersionsfarben, die vorzugsweise Polymer-Dispersionen der genannten Art enthalten, können in an sich üblicher Weise auf die üblichen Substrate, insbesondere Innenwände aufgebracht werden.

Zusätzlich zu den Bindemitteln auf Basis von Polymer-Dispersionen der oben genannten Art enthalten die wäßrigen Dispersionsfarben im allgemeinen überwiegende Mengen an Pigmenten und Füllstoffen, wie Titandioxid (Rutil), Dolomit, Kieselgur, Baryt Calcit, Talkum und Quarzmehl sowie oft übliche Konservierungsmittel, Filmbildehilfsmittel und Verlaufsmittel, sowie in manchen Fällen Verdickungsmittel, wie Hydroxyethylcellulose, Polyacrylsäuren und ethoxylierte Diurethane und übliche Entschäumungsmittel, wie Mineralöle oder Silicone.

Diese Bestandteile sind mit dem erfindungsgemäß zugesetzten Styrol-Acrylsäure-Copolymerisaten gut verträglich. Der Anteil an Bindemittel auf Basis von Polymer-Dispersionen der oben genannten Art beträgt im allgemeinen 3 bis 20, vorzugsweise 4 bis 12 Gew.-% (fest), bezogen auf die gesamte Formulierung.

Anstriche, die mit wäßrigen Dispersionsfarben auf den üblichen Untergründen, z.B. mineralischen Untergründen wie Putzen, unter dem erfindungsgemäßen Zusatz der Styrol-Acrylsäure-Copolymerisate hergestellt sind, sind besonders scheuerfest, was insbesondere bei Innenfarben von Bedeutung ist. Sie übertreffen darin solche Anstriche beachtlich, bei deren Herstellung keine Styrol-Acrylsäure-Copolymerisate der erfindungsgemäßen Art mitverwendet wurden.

Die in den folgenden Beispielen genannten Teile und Prozente beziehen sich auf das Gewicht. Die darin angegebenen mittleren Molekulargewichte wurden osmometrisch mit Hilfe des Mechrolab Osmometers bestimmt. Die darin angegebenen Scheuerfestigkeiten wurden wie folgt bestimmt :

Zur Prüfung der Scheuerbeständigkeit von Anstrichen dient die DIN 53778, Teil 2, als Grundlage. Mit Hilfe eines 60 mm breiten Rakels wird auf einer "Leneta®-Folie" von ca. 430 × 80 mm ein Anstrichfilm aufgezogen,

dessen Trockenschichtdicke 100 μm beträgt. Dieser Film wird 28 Tage bei Raumtemperatur gelagert. Dann wird im Scheuerprüfgerät nach Gardner Model M 105-A unter ständigem Zutropfen einer Waschflüssigkeit auf die Folie eine Scheuerbürste über den Anstrichfilm geführt. Die Anzahl der Scheuerzyklen bis zum Durchscheuern des Anstriches dient als Maß für die Beständigkeit.

Beispiel 1

Herstellung der Bindemittel 1 und 2

In eine handelsübliche 50% ige grobteilige Dispersion I eines Copolymerisats aus 80 Teilen Vinylpropionat und 20 Teilen n-Butylacrylat, die 1% Hydroxyethylcellulose als Schutzkolloid enthält, wird langsam eine 25% ige wäßrige alkalische Lösung eines Polymerharzes I, aus 50 Teilen Styrol, 44 Teilen Acrylsäure und 6 Teilen Methylacrylat, hergestellt nach Beispiel 3 der EP-PS 0100443, eingerührt.

Bindemittel 1 besteht aus 55,6% Polymerdispersion I und 44,4% wäßriger Lösung von Harz I. Das entspricht einem Verhältnis der Polymeren von 71,4% zu 28,6%.

Bindemittel 2 besteht aus 42,8% Polymerdispersion I und 57,2% wäßriger Lösung von Harz I. Das entspricht einem Verhältnis der Polymeren von 60% zu 40%.

Dispersionsfarben

Formulierung einer Dispersionsfarbe mit der Polymerdispersion I im Vergleich zu den Bindemitteln 1 und 2:

| | A | B | C Vergleichsversuch |
|---|---|---|---|
| Wasser | 307 | 347 | 385 |
| konz. Ammoniak | - | - | 2 |
| Natriumpolyphosphat | 1 | 1 | 1 |
| Polymerdispersion I | - | - | 100 |
| Bindemittel 1 | 180 | - | - |
| Bindemittel 2 | - | 140 | - |
| Hydroxyethylcellulose, hochviskos | 5 | 5 | 5 |
| $TiO_2$-(Rutil) | 58 | 58 | 58 |
| gefälltes $CaCO_3$ | 82 | 82 | 82 |
| Talkum (5 μm) | 66 | 66 | 66 |
| Calcit (5 μm) | 124 | 124 | 124 |
| Calcit (10 μm) | 166 | 166 | 166 |
| Testbenzin (Siedebereich 180-210° C) | 6,5 | 6,5 | 6,5 |
| handelsüblicher Entschäumer auf Basis von Mineralöl | 3 | 3 | 3 |
| handelsübliches Konservierungsmittel | 1,5 | 1,5 | 1,5 |
| Scheuerzahl (DIN 53 778) | 1600 | 2300 | 1200 |

Durch die Verwendung von Bindemittel 1 und 2 werden die Scheuerzahlen deutlich erhöht. Dieses zeigt die Foirmulierung B gegenüber Formulierung C, in der das Bindemittel 2 die Polymerdispersion I zu gleichen Teilen (fest/fest) ersetzt und dabei die nahezu doppelte Scheuerzahl ergibt.

4

Beispiel 2

Herstellung von Bindemittel 3 und 4

Zu einer handelsüblichen 50% igen feinteiligen Dispersion II eines Copolymerisats aus 51 Teilen n-Butylacrylat, 49 Teilen Stylor, 2,5 Teilen Acrylsäure und 1 Teil Acrylamid, stabilisiert mit nichtionischen und anionischen Emulgatoren, die einen pH von 7,5 bis 9 hat, wird langsam eine 25% ige wäßrige Lösung eines Polymerharzes II hergestellt aus 60 Teilen Styrol und 40 Teilen Acrylsäure nach Beispiel 1 der EP-PS 0100443 gegeben.

Für Bindemittel 3 werden 86% Polymerdispersion II und 14% einer 25% igen wäßrigen Lösung von Harz II (92,5% festes Polymer aus der Dispersion II und 7,5% Harz II fest) eingesetzt.

Für Bindemittel 4 werden 84,2% Polymerdispersion II und 15,8% wäßrige Lösung von Harz II (91,4% festes Polymer aus der Dispersion II und 8,6% Harz II, fest) eingesetzt.

Dispersionsfarben

Formulierung einer Dispersionsfarbe mit der Polymer-Dispersion II im Vergleich zu den Bindemitteln 3 und 4.

| | D | E | F Vergleichsversuch |
|---|---|---|---|
| Wasser | 398 | 408 | 399 |
| org. Dispergiermittel | - | - | 1 |
| Natriumpolyphosphat | 3 | 3 | 3 |
| konz. Ammoniak | - | - | 1 |
| Acrylat/Styrol Dispersion II | - | - | 80 |
| Bindemittel 3 | 86 | - | - |
| Bindemittel 4 | - | 76 | - |
| Hydroxyethylcellulose, hochviskos | 5 | 5 | 5 |
| handelsübliches Konservierungsmittel- | 3 | 3 | 3 |
| handelsüblicher Entschäumer | 3 | 3 | 3 |
| Testbenzin (Siedebereich 180-210°C) | 12 | 12 | 12 |
| Methyldipropylenglykol | 10 | 10 | 13 |
| $TiO_2$-(Rutil) | 60 | 60 | 60 |
| gefälltes $CaCO_3$ | 65 | 65 | 65 |
| Calcit, 5 $\mu$m oberflächen-vergütet | 75 | 75 | 75 |
| Magnesiumhydrosilikat, 5 $\mu$m | 60 | 60 | 60 |
| Talkum 5 $\mu$m | 40 | 40 | 40 |
| Dolomit 5 $\mu$m | 180 | 180 | 180 |
| Scheuerzahlen | 4000 | 2200 | 1200 |

Die Formulierung F enthält 0,1% eines handelsüblichen pulverförmigen Natriumpolyacrylats als Dispergiermittel mit dem Zweck, eine Lagerstabilität der Farbe über mindestens 6 Monate zu gewährleisten. Die Formu-

5

EP 0 332 014 B1

lierungen mit Bindemittel 3 und 4 benötigen dieses Dispergiermittel nicht.

Die Formulierungen F und D haben mit 4% gleiche Gesamtanteile an Bindemittel (fest). Die Scheuerzahl steigt durch die Verwendung des Bindemittels 3 von 1200 (Formulierung F) auf 4000 Zyklen (Formulierung D). Dies ermöglicht die Reduzierung der gesamten Bindemittelmenge, ohne an der Scheuerfestigkeit zu verlieren.

Durch die Verwendung von Bindemittel 4 in der Formulierung E läßt sich gegenüber Formulierung F der Bindemittelanteil (fest) um nahezu 12,5% verringern, und man erreicht dennoch eine um 80% höhere Scheuerfestigkeit.

**Patentansprüche**

1. Verwendung von Copolymerisaten, die aus

a)    37 bis 45 Gew.-% Acrylsäure
b)    55 bis 63 Gew.-% Styrol und
c)    0 bis 6 Gew.-% anderen hydrophoben monoolefinisch ungesättigten Monomeren

bei 200 bis 400°C durch kontinuierliche Massepolymerisation in Abwesenheit von Polymerisationsinitiatoren und Reglern hergestellt sind und mittlere Molekulargewichte von 400 bis 5000 haben, als Additive für wäßrige Dispersionsfarben.

**Claims**

1. Use of a copolymer prepared from

a)    37-45% by weight of acrylic acid,
b)    55-63% by weight of styrene and
c)    0-6% by weight of other hydrophobic monoolefinically unsaturated monomers

at 200-400°C by continuous bulk polymerization in the absence of polymerization initiators and regulators and having average molecular weights of from 400 to 5000, as additives for aqueous emulsion paints.

**Revendications**

1. Utilisation, à titre d'additifs pour des colorants dispersés aqueux, de copolymères qui sont préparés à partir de

a)    37 à 45% en poids d'acide acrylique,
b)    55 à 63% en poids de styrène et
c)    0 à 6% en poids d'autres monomères à insaturation monooléfinique, hydrophobes,

à 200-400°C, par copolymérisation continue en masse en l'absence d'amorceurs de polymérisation et de régulateurs et qui possèdent des masses moléculaires moyennes de 400 à 5000.